# EUROPEAN PATENT APPLICATION

(11) **EP 4 813 959 A1**
(43) Date of publication of application: **30.09.2026**
(21) Application number: 26165852.0
(22) Date of filing: 18.03.2026
(51) Int. Cl.: C04B 35/80, B32B 18/00, C04B 35/565, C04B 35/573, C04B 35/622, C04B 35/628, C04B 35/634, C04B 35/638, F01D 5/18, F01D 5/28

(54) **CMC HAVING ROUGHENED SURFACES FOR IMPROVED HEAT TRANSFER**

(30) Priority: 18.03.2025 US 202519082525
(71) Applicant: RTX Corporation, Farmington, CT 06032 (US)
(72) Inventor: WILKINS, Peter, Glastonbury, 06033 (US); SMIDDY, Winston, South Windsor, 06074 (US); SCHNEIDER, Alex J., Manchester, 06042 (US); LUTJEN, Paul M., Kennebunkport, 04046 (US)
(74) Representative: Dehns

(57) **Abstract**

A method is provided for preparing a ceramic matrix composite (CMC) component (300) having at least one surface with augmentation features to enhance heat transfer. In one process embodiment, an initial CMC preform is formed by laying up/stacking a plurality of ceramic fiber plies with a binder to form an initial preform. Thereafter, one or more plies (210, 220) of ceramic fiber infiltrated with ceramic particles (230) and binder are applied to a surface of the initial preform to form a final preform. The ceramic particles create a roughened surface and the particles at the roughened surface form with augmentation features (370) that can enhance heat transfer. The binder can then be removed and the final preform can be subjected to densification to create a ceramic matrix around the ceramic fiber tows and form the CMC component.

## Description

### FIELD OF THE INVENTION

The present disclosure relates generally to methods for manufacturing ceramic matrix composites (CMCs). In particular, the present disclosure concerns manufacturing CMC components cooling enhancements.

### BACKGROUND OF THE INVENTION

Gas turbine engines, in general, include a fan section, a compressor section, a combustion chamber, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and drive the compressor and fan sections.

Certain components of gas turbine engines are thus exposed to the high-energy, high temperature gas flow (flow path components). Therefore, it is desirable that such components be made of materials with high heat resistance such as ceramic matrix composites (CMCs). CMC components can withstand much higher operating temperatures (e.g., greater than 1400°C) than components composed of superalloys.

While CMC materials can withstand much higher operating temperatures than components composed of superalloys, CMCs have comparably lower thermal conductivity than superalloys. To increase their operational lifespans, precautions can be taken to cool CMC components by subjecting the components, or sections thereof, to a flow of cooling fluid (e.g., air).

Thus, it is particularly desirable to take steps to efficiently cool CMC components using available cooling air flows. Understandably, it is also desirable to use cooling fluid in an efficient manner. Providing CMCs with structural features that enhance cooling is one way to increase cooling efficiency. For example, CMC components can be provided with cooling cavities to allow cooling air to penetrate into the interior of the CMC component and provide cooling thereof.

There is thus a continuing need for alternative and/or improved manufacturing methods for providing cooling structures that allow for efficient use of cooling fluid in the cooling of CMC components exposed to high temperature gas flow.

### SUMMARY OF THE INVENTION

In general, the present disclosure relates to methods for preparing CMC materials with roughened surfaces to increase heat transfer, as well as products produced by such methods. In particular, the present disclosure relates to methods for preparing CMC materials, and products produced thereby, having surfaces roughened by ceramic particulates to provide augmentation features for enhancing heat transfer.

The present disclosure is directed, in a first aspect, to an article comprising:
a preform comprising a plurality of ceramic fiber plies within a binder, wherein the ceramic fiber plies are formed from woven ceramic fiber tows,
wherein the preform has at least one surface wherein the ply or plies forming the at least one surface have embedded ceramic particles providing the at least one surface with augmentation features to enhance heat transfer.

The present disclosure is directed, in a further aspect, to a CMC component comprising an article as described above, wherein the preform is densified in which the ceramic fiber tows are embedded within a ceramic matrix.

The present disclosure is directed, in a further aspect, to a method of preparing an article, the method comprising:
providing an initial preform of a ceramic matrix composite comprising a plurality of ceramic fiber plies and a binder,
providing one or more plies of ceramic fiber infiltrated with ceramic particles and binder, and
applying the one or more plies of ceramic fiber infiltrated with ceramic particles and binder to a surface of the initial preform to form a final preform having at least one surface with augmentation features to enhance heat transfer.

The present disclosure is further directed, in an additional aspect, to a method of preparing a CMC component, the method comprising:
providing an initial preform of a ceramic matrix composite comprising a plurality of ceramic fiber plies and a binder;
providing one or more plies of ceramic fiber infiltrated with ceramic particles and binder;
applying the one or more plies of ceramic fiber infiltrated with ceramic particles and binder to a surface of the initial preform to form a final preform having at least one surface with augmentation features to enhance heat transfer;
removing the binder from the final preform;
optionally applying one or more interphase coating(s) deposited onto the fibers of the final preform; and
subjecting the final preform to densification to form a ceramic matrix around the ceramic fiber tows and form the CMC component.

The present disclosure is further directed, in an additional aspect, to a CMC jet engine component having a matrix with a carbide matrix phase and an oxide matrix phase, prepared by a process comprising:
providing an initial preform of a ceramic matrix composite comprising a plurality of ceramic fiber plies and a binder;
providing one or more plies of ceramic fiber infiltrated with ceramic particles and binder;
applying the one or more plies of ceramic fiber infiltrated with ceramic particles and binder to a surface of the initial preform to form a final preform having at least one surface with augmentation features to enhance heat transfer;
removing the binder from the final preform;
optionally applying one or more interphase coating(s) deposited onto the fibers of the final preform; and
subjecting the final preform to densification to form a ceramic matrix around the ceramic fiber tows and form the CMC component.

In a further embodiment of any of the above embodiments, the ceramic fiber tows are SiC fiber tows.

In a further embodiment of any of the above embodiments, the ceramic particles are selected from silicon carbide, boron carbide, zirconium carbide, boron nitride, titanium nitride, and zirconium nitride.

In a further embodiment of any of the above embodiments, the ceramic particles are silicon carbide.

In a further embodiment of any of the above embodiments, the ceramic particles have a particle size of 10 µm to 550 µm.

In a further embodiment of any of the above embodiments, the binder is a polymeric binder.

In a further embodiment of any of the above embodiments, the binder is polyvinyl alcohol or polyvinyl butyral.

In a further embodiment of any of the above embodiments, the preform includes a three-dimensional weave in which a plurality of warp fibers are interwoven through a plurality of weft fiber layers.

In a further embodiment of any of the above embodiments, the CMC component has a bottom inner radial surface and a top outer radial surface, and wherein the top outer radial surface incudes the at least one surface with augmentation features.

In a further embodiment of any of the above embodiments, the CMC component has a bottom inner radial surface, a top outer radial surface, and a cooling cavity, the cooling cavity having a cooling cavity opening at the top outer radial surface, side walls, and a bottom wall, and wherein the bottom wall of the cooling cavity includes the at least one surface with augmentation features.

In a further embodiment of any of the above embodiments, the binder is removed from the final preform by heat treatment, solvent dissolution, or washing.

In a further embodiment of any of the above embodiments, one or more interphase coating(s) is deposited onto the fibers of the final preform, wherein interphase coating is a coating of boron nitride, silicon-doped boron nitride, boron-doped carbon, boron carbide, titanium nitride, or zirconium nitride.

In a further embodiment of any of the above embodiments, the final preform is subjected to densification to form a ceramic matrix around the ceramic fiber tows to form a CMC component.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
- Fig. 1: schematically illustrates a partial cross section of an exemplary gas turbine engine;
- Fig. 2: is a flow chart showing steps for preparation of a CMC material with roughened surface(s);
- Fig. 3: is a cross sectional view of plies of ceramic fabric infiltrated with ceramic particles (roughened plies);
- Fig. 4: illustrates a cross section of a CMC preform with roughened plies applied to a top surface thereof and a bottom wall of a cooling cavity.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by volume percent (vol. %.) based on a total volume of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

The present disclosure provides a method for producing a CMC component comprising a CMC material made of ceramic fiber tows within a ceramic matrix in which surfaces of the component include augmentation features formed by ceramic particles.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces in the direction toward the flow of the hot gases, i.e., faces upstream. The trailing edge/portion of a structure is the edge/portion that the faces in the direction away from the flow of the hot gases, i.e., faces downstream.

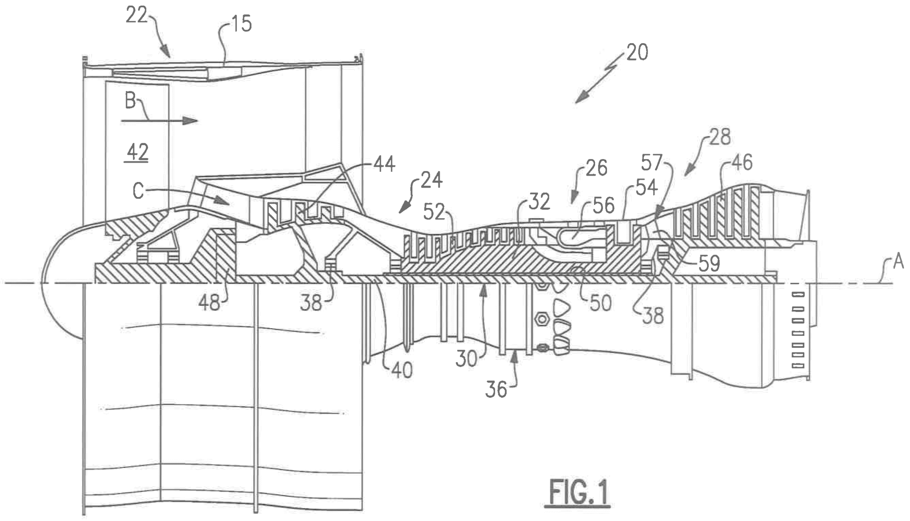

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

As noted above, gas turbine engine components can be made from CMC materials. Such components include blade outer air seal(s) (BOAS(s)), BOAS segments, other seals, vane airfoils and platforms therefor, blade airfoils and platforms therefor, and combustor liners. In general, these CMC components are prepared by first creating a CMC preform which serves as the initial framework for creating the CMC component.

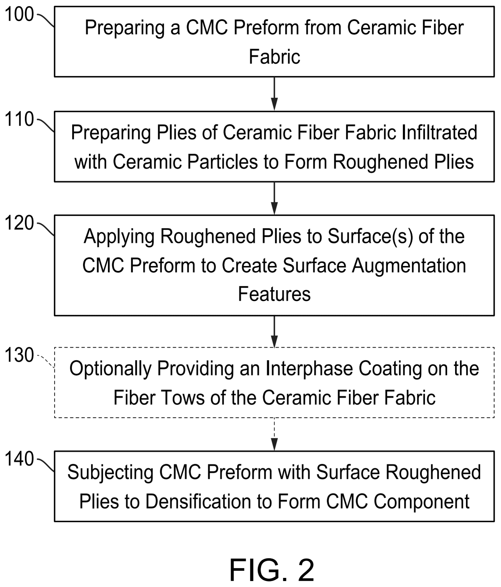

Fig. 2 is a process flow chart for preparing a CMC material with roughened surface(s) according to the present disclosure. In Step 100, an initial partial CMC preform is prepared. The preform contains a stack of fabric sheets or plies in which the stack is formed via a layup process. Plies are made from ceramic fibers, or bundles of ceramic fibers called tows, held together with a binder. The fiber tows can be in the form of unidirectional tows or can be woven fibers. For example, the fibers can be woven into a two-dimensional fabric sheet or ply and then the plies are stacked during the layup process to form the preform. Alternatively, the preform can be in the form of a three-dimensional weave wherein, for example, a plurality of warp fibers are interwoven through a plurality of weft fiber layers. Binders can be used to help hold the fibers/plies together to provide a certain rigidity to the preform, for example, polymeric binders such as polyvinyl alcohol (PVA) or polyvinyl butyral (PVB).

The fibers/filaments used in the CMC preforms may be, for example, silicon carbide (SiC), carbon, mullite, zirconium carbide (ZrC), hafnium carbide (HfC), silicon nitride, aluminum oxide, or combinations thereof. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In one particular example, the fibers are SiC fibers.

In Step 110, one or more separate plies of ceramic fabric containing ceramic fiber tows are infiltrated with a slurry of ceramic particles and binder (e.g., PVA or PVB). The ceramic particles will provide from a roughened surface on the plies. The slurry infiltration can be performed at, for example, a temperature of 0°C to 25°C and a pressure of 10 to 20 psia. The ceramic particles can be selected from metal carbides and metal nitrides. For example, the ceramic particles can be selected from zirconium carbide particles, hafnium carbide particles, tantalum carbide particles, niobium carbide particles, titanium carbide particles, tungsten carbide particles, cobalt carbide particles, vanadium carbide particles, chromium carbide particles, ytterbium carbide particles, yttrium carbide particles, tantalum hafnium carbide particles, silicon nitride particles, titanium particles, boron nitride particles, zirconium nitride particles, hafnium nitride particle, niobium nitride particles, tantalum nitride particle, vanadium nitride particles, ytterbium nitride, and yttrium nitrides particles. To avoid a mismatch of coefficients of thermal expansion (CTE), it is desirable to have the CTE of the ceramic particles be similar to the CTE of the fiber tows. In one embodiment, the fiber and SiC fibers and the ceramic particles are SiC particles.

The size of the particles can vary greatly sand will depend on the size of the pores within the fabric plies and also on the desired roughness to be achieved. For example, the particle size can be 10 µm to 550 µm, 25 µm to 500 µm, 35 µm to 250 µm, or 50 µm to 100 µm.

In Step 120, the roughened plies with ceramic particles are applied to one or more surfaces of the initial preform to form a final preform. The surface to which the roughened plies are applied are surfaces that will be subjected to the flow of cooling air when the CMC component is in operation. For example, the surface can be a top outer radial surface of the CMC component. In another embodiment, the surface can be the bottom wall of a cooling cavity in the CMC component. Following application of the roughened plies, the binder can be removed by heat treatment, during which the binder is burned or vaporized, or can be removed by solvent dissolution and washing.

In Step 130, after applying the roughened plies, the fibers of the preform can, optionally, be provided with one or several interphases deposited prior to introduction of matrix material. This interphase coating can be, for example, a coating of boron nitride, silicon-doped boron nitride, boron-doped carbon, boron carbide, titanium nitride, or zirconium nitride which is applied by chemical vapor infiltration (CVI). The interphase coating is used to ensure that the composite will exhibit non-brittle behavior to reduce crack formation and/or propagation.

In step 140, after the final CMC preform is formed, the preform is subjected to densification to add matrix material to fill the remaining void spaces within the preform. This procedure yields a matrix material in ceramic fibers or fiber tows are embedded as reinforcing materials. Densification thus stiffens and strengthens the fiber layers or woven plies of ceramic fiber tows to form the CMC. By filing the pores within the preform, densification reduces the porosity of the preform, making it more solid and robust. The goal is to achieve a higher relative density, and ensure that the final CMC structure is compact and free of large voids. In one particular example, the CMC material contains SiC fibers within a SiC matrix, also referred to as a SiC/SiC composite.

Various methods can be used to add matrix material during densification. These include, but are not limited to, chemical vapor infiltration (CVI), melt infiltration (MI) (such as liquid silicon infiltration (LSI)), and polymer infiltration and pyrolysis (PIP).

Chemical vapor infiltration (CVI) involves introducing gaseous precursors into the porous CMC preform. These precursors react at the surface of the fibers, depositing additional material and filling the voids. Chemical liquid-vapor deposition (CLVD) uses liquid precursors that vaporize and infiltrate the preform. The liquid-to-vapor conversion occurs at the fiber surface, leading to densification.

Liquid silicon infiltration (LSI) utilizes liquid (molten) silicon to infiltrate the CMC preform. Silicon reacts with carbon or other constituents of the CMC preform, forming a dense matrix.

In polymer infiltration and pyrolysis (PIP), a polymer precursor is infiltrated into the preform. The subsequent pyrolysis process converts the polymer into a ceramic matrix. During pyrolysis the matrix shrinks which can lead to formation of microcracks, which can thus require repeating the polymer and infiltration cycle multiple times.

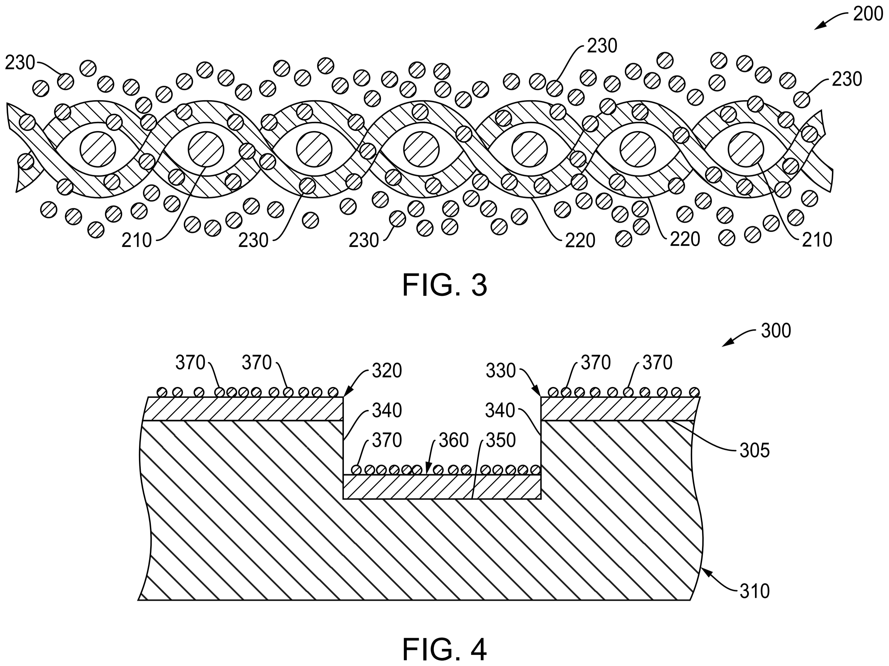

Fig. 3 is a schematic cross section of a ceramic fiber ply 200 that has been roughened by an infiltration of a slurry of ceramic particles and binder, e.g., PVB. In this embodiment, the ply has a two-dimensional weave of warp fiber tows 210 and weft fiber tows 220. Ceramic particles 230 are attached to surfaces of the ceramic fiber ply 200 by a binder (not shown).

Fig. 4 is a schematic cross section of a CMC component 300 (e.g., a BOAS segment) with roughened surfaces according to the present disclosure. In this embodiment, the CMC has a base structure 310. On a top surface 305 of the base structure 310, one or more roughened top plies 320 and 330 are applied. Also, in this embodiment, CMC component 300 is provided with a cooling cavity defined by side walls 340 and a bottom wall 350. One or more roughened plies 360 are applied to the bottom wall. The roughness is formed by the presence of ceramic particles 370 which provide surface augmentation features. These surface augmentation features enhance heat transfer by increasing surface area for interaction with cooling air flow and by creating cooling air flow turbulence near the surface of the CMC component.

The present disclosure provides an efficient method for forming CMC components with surface augmentation features to enhance heat transfer and facilitate the cooling thereof.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. An article comprising:
a preform comprising a plurality of ceramic fiber plies (200) within a binder, wherein the ceramic fiber plies are formed from woven ceramic fiber tows (210, 220),
wherein the preform has at least one surface wherein the ply or plies forming the at least one surface have embedded ceramic particles (230) providing the at least one surface with augmentation features (370) to enhance heat transfer.

2. The article according to claim 1, wherein the ceramic fiber tows are SiC fiber tows.

3. The article according to claim 1 or 2, wherein the ceramic particles are selected from silicon carbide, boron carbide, zirconium carbide, boron nitride, titanium nitride, and zirconium nitride.

4. The article according to claim 1, 2 or 3, wherein the ceramic particles are silicon carbide.

5. The article according to any preceding claim, wherein the ceramic particles have a particle size of 10 µm to 550 µm.

6. The article according to any preceding claim, wherein the binder is a polymeric binder, wherein, optionally, the binder is polyvinyl alcohol or polyvinyl butyral.

7. The article according to any preceding claim, wherein the preform includes a three-dimensional weave in which a plurality of warp fibers are interwoven through a plurality of weft fiber layers.

8. A CMC component (300) comprising an article according to any preceding claim, wherein the preform is densified in which the ceramic fiber tows are embedded within a ceramic matrix.

9. The CMC component according to claim 8, wherein the component has a bottom inner radial surface and a top outer radial surface, and wherein the top outer radial surface incudes the at least one surface with augmentation features.

10. The CMC component according to claim 8 or 9, wherein the component has a bottom inner radial surface, a top outer radial surface, and a cooling cavity, the cooling cavity having a cooling cavity opening at the top outer radial surface, side walls (340), and a bottom wall (350), and wherein the bottom wall of the cooling cavity includes the at least one surface with augmentation features.

11. A method of preparing an article, the method comprising:
providing an initial preform of a ceramic matrix composite comprising a plurality of ceramic fiber plies and a binder,
providing one or more plies (210, 220) of ceramic fiber infiltrated with ceramic particles (230) and binder, and
applying the one or more plies of ceramic fiber infiltrated with ceramic particles and binder to a surface of the initial preform to form a final preform having at least one surface with augmentation features to enhance heat transfer,
wherein, optionally:
the ceramic fiber tows are SiC fiber tows and the ceramic particles are silicon carbide; and/or
the ceramic particles have a particle size of 10 µm to 550 µm; and/or
the binder is polyvinyl alcohol or polyvinyl butyral.

12. The method according to claim 11, further comprising removing the binder from the final preform by heat treatment, solvent dissolution, or washing.

13. The method according to claim 12, further comprising depositing one or more interphase coating(s) onto the fibers of the final preform, wherein interphase coating is a coating of boron nitride, silicon-doped boron nitride, boron-doped carbon, boron carbide, titanium nitride, or zirconium nitride.

14. The method according to claim 12 or 13, further comprising subjecting the final preform to densification to form a ceramic matrix around the ceramic fiber tows to form a CMC component (300),
wherein, optionally, CMC component has a cooling cavity with a bottom wall (350), and the bottom wall of cooling cavity includes the at least one surface with augmentation features.

15. A method of preparing a CMC component (300), the method comprising:
providing an initial preform of a ceramic matrix composite comprising a plurality of ceramic fiber plies and a binder;
providing one or more plies (210, 220) of ceramic fiber infiltrated with ceramic particles (230) and binder;
applying the one or more plies of ceramic fiber infiltrated with ceramic particles and binder to a surface of the initial preform to form a final preform having at least one surface with augmentation features to enhance heat transfer;
removing the binder from the final preform;
optionally applying one or more interphase coating(s) deposited onto the fibers of the final preform; and
subjecting the final preform to densification to form a ceramic matrix around the ceramic fiber tows and form the CMC component.
